# EUROPEAN PATENT APPLICATION

(11) **EP 4 790 646 A1**
(43) Date of publication of application: **12.08.2026**
(21) Application number: 23954690.6
(22) Date of filing: 02.10.2023
(51) Int. Cl.: G06T 7/246

(54) **DETECTION METHOD AND DETECTION SYSTEM**

(71) Applicant: Japan Aerospace Exploration Agency, Tokyo 182-8522 (JP)
(72) Inventor: YANAGISAWA, Toshifumi, Chofu-shi, Tokyo 182-8522 (JP); IWAKI, Akihiro, Chofu-shi, Tokyo 182-8522 (JP)
(74) Representative: Epping - Hermann - Fischer
(86) International application number: PCT/JP2023/035934
(87) International publication number: WO 2025/074475

(57) **Abstract**

This detection method is for detecting a moving object on the basis of image information and comprises: a step for extracting a feature point pixel from all pixels in the image information; and a step for detecting a moving object on the basis of information relating to data of the feature point pixel.

## Description

### Technical Field

The present disclosure relates to a detection method and a detection system.

### Background Art

A system that detects a moving object is known. In conventional art, in order to detect a moving object, a plurality of images are acquired by a sensor, and an object moving in the images is checked to detect the moving object (for example, see PTL 1). The plurality of images can be acquired by, for example, a method described in PTL 2.

### Citation List

### Patent Literature

PTL 1
   Japanese Patent Application Laid-Open No. 2003-323625
PTL 2
   Chinese Patent Application Publication No. 111832504

### Summary of Invention

### Technical Problem

However, in conventional art, a plurality of images are required, and therefore there is a risk that the amount of information on the images acquired by the sensor and transmitted becomes large.

An object of the present disclosure is to provide a detection method and a detection system capable of reducing the amount of image information to be transmitted.

### Solution to Problem

The detection method according to the present disclosure is a detection method for detecting a moving object based on image information, the detection method including:
extracting a feature point pixel from all pixels in the image information; and
detecting the moving object based on information on data of the feature point pixel.

The detection system according to the present disclosure is a detection system that detects a moving object based on image information, the detection system including:
an extraction unit that extracts a feature point pixel from all pixels in the image information; and
a detection unit that detects the moving object based on information on data of the feature point pixel.

### Advantageous Effects of Invention

According to the present disclosure, the amount of image information to be transmitted can be reduced.

### Brief Description of Drawings

FIG. 1 illustrates a schematic configuration of a detection system according to an embodiment of the present disclosure;
FIG. 2 is a diagram for describing a noise removal parameter;
FIG. 3 is a diagram for describing a noise removal parameter;
FIG. 4 is a diagram for describing an example of text data;
FIG. 5A illustrates an example of an image captured by an imaging unit;
FIG. 5B illustrates an example of an image restored based on the text data;
FIG. 6 is a flowchart illustrating an example of a flow of processing executed by each apparatus according to the present embodiment;
FIG. 7 is a diagram for describing a bias parameter; and
FIG. 8 is a diagram for describing an example of text data.

### Description of Embodiments

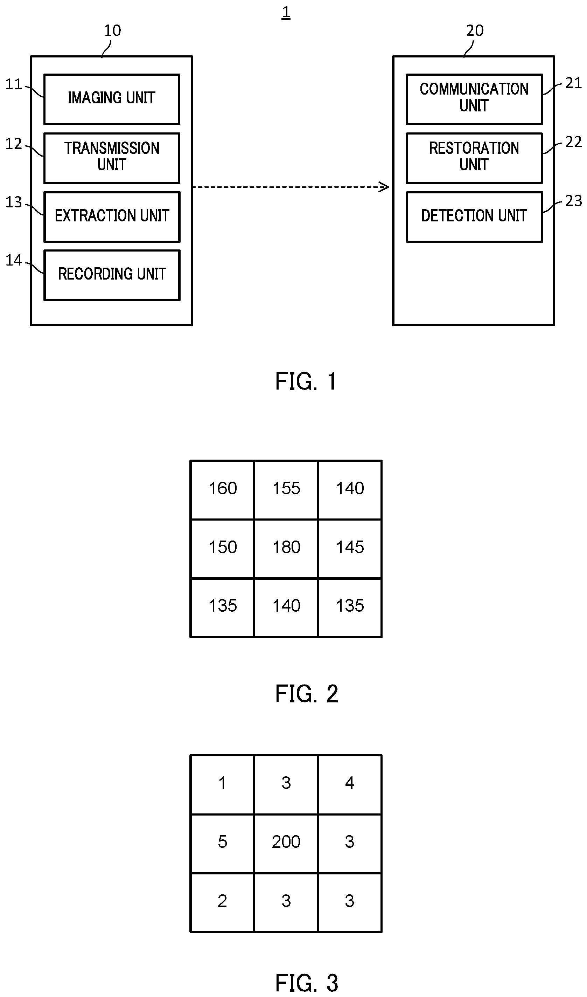

Hereinafter, embodiments of the present disclosure will be described in detail based on the drawings. FIG. 1 illustrates a schematic configuration of detection system 1 according to the embodiment of the present disclosure.

As illustrated in FIG. 1, detection system 1 is a system that detects a moving object from image information. Specifically, detection system 1 is a system that can detect a moving object in a celestial region, such as outer space, based on the information of an image observed by a flight apparatus (for example, an artificial satellite) capable of flying in the celestial region. The moving object may be, for example, space debris, any object floating or flying in the celestial region, or the like. Detection system 1 includes flight apparatus 10 and detection apparatus 20.

Flight apparatus 10 is, for example, an artificial satellite capable of flying in outer space, and is an apparatus capable of transmitting image information to an external apparatus. Flight apparatus 10 includes imaging unit 11, transmission unit 12, extraction unit 13, and recording unit 14.

Imaging unit 11 is, for example, a camera, and can capture an image of a specific observation region in outer space.

Transmission unit 12 is a communication apparatus capable of communicating with an external apparatus (for example, detection apparatus 20), and is an apparatus for transmitting information based on the image captured by imaging unit 11 to detection apparatus 20.

Extraction unit 13 includes a central processing unit (CPU), a read only memory (ROM), a random access memory (RAM), and an input/output circuit (not illustrated). Extraction unit 13 extracts a feature point pixel in the information of an image captured by imaging unit 11.

The feature point pixel is a pixel that indicates a characteristic portion in an image, and may be, for example, a pixel of a portion (such as a fixed star, a moving object, or the like) having a feature different from a dark region in a celestial region in which relatively dark regions occupy most of the celestial region.

Specifically, the feature point pixel is, for example, a pixel satisfying a brightness condition and a noise removal condition. For example, when a target pixel is a moving object, the center portion of the moving object tends to have the highest brightness value, and the brightness value tends to decrease as the distance from the center portion increases. The brightness condition is a condition for selecting a pixel that matches the above tendency as a pixel to be extracted as the feature point pixel.

Specifically, the condition for satisfying the brightness condition may be such that the target pixel to be extracted as the feature point pixel is a pixel that is among a plurality of pixels included in an image and has the following brightness value: a brightness value equal to or higher than a predetermined value and a value brighter than those of a plurality of peripheral pixels located around the pixel. The plurality of peripheral pixels may be, for example, eight pixels located around the target pixel.

The predetermined value is a value that can be set to any value, and may be set to, for example, a value (for example, 160 or the like) brighter than that of a region in which no object is present in the celestial region.

Therefore, by setting the brightness condition, it becomes easier to extract, as the feature point pixel, a target pixel that allows easier identification of a moving object.

For example, as illustrated in FIG. 2, it is assumed that there are nine pixels with three pixels in the vertical direction and three pixels in the horizontal direction. Among the nine pixels, the target pixel is a pixel located at the center, and the plurality of peripheral pixels are eight pixels located around the target pixel. The number shown in each pixel in FIG. 2 is a brightness value of each pixel.

For example, in FIG. 2, the brightness value of the target pixel is 180, and the brightness values of the plurality of peripheral pixels are 160, 155, 140, 150, 145, 135, 140, and 135. Here, when the predetermined value is set to 160, the target pixel in FIG. 2 is a pixel having a brightness value equal to or higher than the predetermined value and brighter than all the peripheral pixels, and thus satisfies the brightness condition.

The noise removal condition may be a condition for removing a target pixel as noise from the feature point pixel candidates when the target pixel corresponds to noise included in an image.

Here, when an image includes noise, the brightness value of the target pixel of a portion corresponding to the noise may be significantly higher than a plurality of peripheral pixels as illustrated in FIG. 3. Specifically, in FIG. 3, the brightness value of the target pixel is 200, and the brightness values of the plurality of peripheral pixels are 1, 3, 4, 5, 3, 2, 3, and 3.

In this case, the target pixel in FIG. 3 is a pixel having a brightness value equal to or higher than the predetermined value and brighter than all the peripheral pixels, and thus satisfies the brightness condition. However, by setting the noise removal condition, it is possible to remove such a target pixel as noise from the feature point pixel candidates.

For example, a condition for satisfying the noise removal condition may be such that the target pixel is a pixel having a noise removal parameter equal to or higher than a predetermined threshold value.

The noise removal parameter is a parameter for removing a pixel corresponding to noise in an image from the feature point pixel candidates, and is a parameter calculated based on the pixel and the plurality of peripheral pixels.

For example, the noise removal parameter may be a value obtained by dividing the sum of the brightness value of a target pixel and the brightness values of a plurality of peripheral pixels by the brightness value of the target pixel.

When a target pixel is noise, the brightness value thereof is significantly higher than the plurality of peripheral pixels, and therefore the sum of the brightness value of the target pixel and the brightness values of the plurality of peripheral pixels is a value close to the brightness value of the target pixel. That is, the value of the noise removal parameter is a value close to 1.

Therefore, the predetermined threshold value may be appropriately set to a value that ensures that a target pixel having a noise removal parameter value close to 1 can be removed from the feature point pixel candidates. For example, the predetermined threshold value may be set to a value of 2 or more (for example, 2.5 or the like).

For example, the target pixel in FIG. 3 satisfies the brightness condition as described above, but the noise removal parameter thereof is a value of 1.12, which is the value obtained by dividing 224 (namely the sum of the nine pixels) by 200. As a result, the noise removal parameter becomes less than the predetermined threshold value, and therefore the target pixel in FIG. 3 can be removed from the pixels to be extracted as the feature point pixel.

The target pixel in FIG. 2 has a noise removal parameter of a value of 7.44, which is the value obtained by dividing 1340 (namely the sum of the nine pixels) by 180. The noise removal parameter thus becomes equal to or higher than the predetermined threshold value. Therefore, the target pixel in FIG. 2 is extracted as the feature point pixel by extraction unit 13.

Recording unit 14 records, in text data, data of a feature point pixel (also referred to as "feature point pixel data") extracted by extraction unit 13. The feature point pixel data may be, for example, the x-coordinate of a feature point pixel in an image, the y-coordinate of the feature point pixel in the image, the brightness value of the feature point pixel, and/or a noise removal parameter of the feature point pixel.

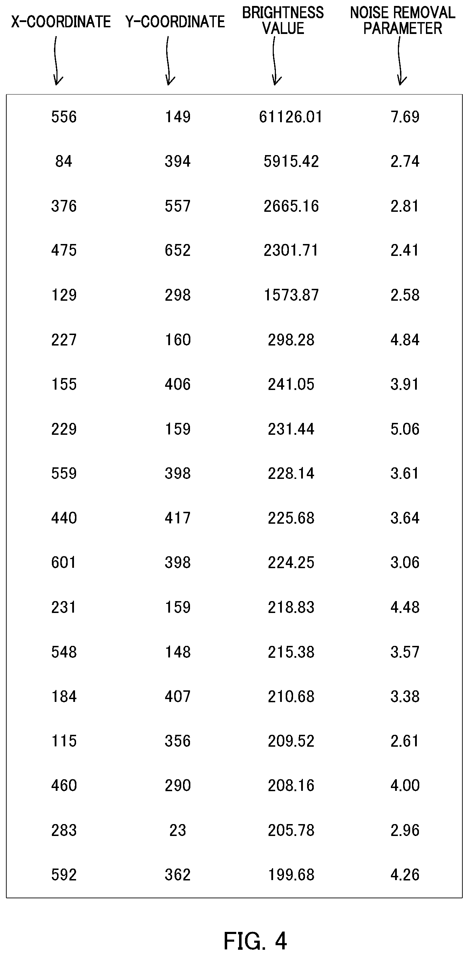

For example, FIG. 4 illustrates an example with 18 feature point pixels being extracted in the image. The text data illustrated in FIG. 4 shows an example in which, from the left, the x-coordinate of a feature point pixel, the y-coordinate of the feature point pixel, the brightness value of the feature point pixel, and the noise removal parameter of the feature point pixel.

That is, only the data of a feature point pixel is recorded in the text data, and the data of pixels other than the feature point pixel is not recorded. Therefore, it is possible to reduce the amount of image information as compared with text data in which all the pixels in the image are recorded.

Transmission unit 12 transmits the information in the text data recorded by recording unit 14 to detection apparatus 20.

In addition, imaging unit 11 captures images at a predetermined time interval, and extraction unit 13 extracts a feature point pixel for each of the plurality of images observed at different times. For the detection of a moving object, a plurality (for example, 10) of continuous images captured at a relatively short time interval are required. Therefore, the predetermined time can be set to any time suitable for detecting the moving object.

Recording unit 14 records the feature point pixel data corresponding to each of the plurality of images in the text data. In the text data, only the feature point pixel data corresponding to one image is recorded. That is, a plurality of pieces of text data respectively corresponding to the plurality of images are generated.

Detection apparatus 20 is an apparatus that detects a moving object in a celestial region based on image information, and may be, for example, an apparatus such as a personal computer (PC). Detection apparatus 20 is provided with a CPU, a ROM, a RAM, and an input/output circuit (not illustrated) and includes communication unit 21, restoration unit 22, and detection unit 23.

Communication unit 21 receives, for example, the information in the text data transmitted from transmission unit 12 via a wired or wireless network.

Restoration unit 22 restores an image based on the information in the text data. Specifically, restoration unit 22 restores the image by setting the brightness value of a pixel corresponding to the feature point pixel as a first brightness value and setting the brightness value of a pixel that is not the feature point pixel as a second brightness value that is different from the first brightness value.

The first brightness value may be the maximum brightness value, and the second brightness value may be the minimum brightness value.

Specifically, restoration unit 22 restores an image by setting coordinates corresponding to the x-coordinate and the y-coordinate recorded in the text data as the first brightness value and setting coordinates corresponding to the x-coordinate and the y-coordinate not recorded in the text data as the second brightness value.

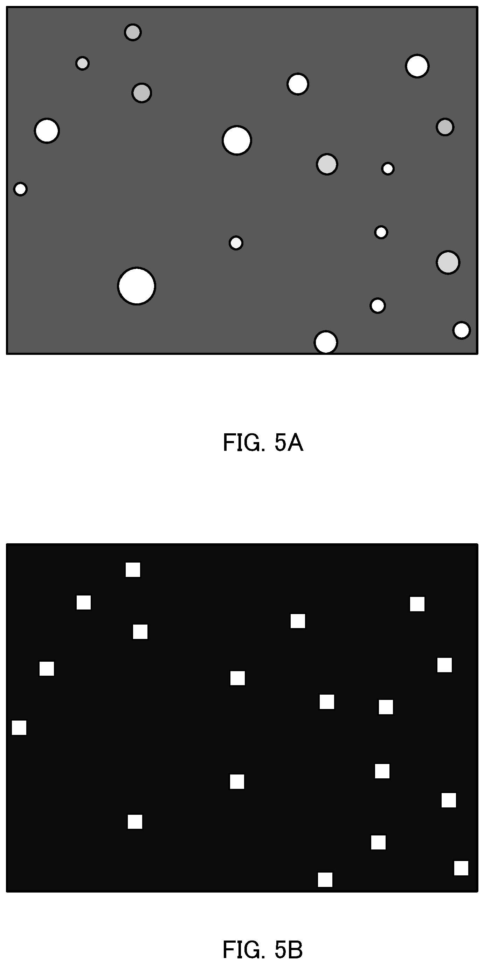

For example, it is assumed that the image illustrated in FIG. 5A is acquired by imaging unit 11. When the circular portions in FIG. 5A are portions extracted as feature point pixels, the restored image restored by restoration unit 22 becomes, for example, an image illustrated in FIG. 5B.

As a result, it is possible to acquire binarized image data. It is also possible to acquire image data from which noise included in the image has been removed.

In addition, restoration unit 22 generates a restored image corresponding to each of the plurality of images observed at different times. That is, restoration unit 22 generates a restored image for each of a plurality of pieces of text data respectively corresponding to the plurality of images.

Detection unit 23 detects a moving object based on the plurality of restored images respectively corresponding to the plurality of images. Specifically, detection unit 23 may detect the moving object by the same method as the method described in PTL 1, for example.

Specifically, detection unit 23 generates a median value image of a plurality of restored images to removes images of fixed stars contained in the restored images. Detection unit 23 then generates an average value image using the plurality of median value images. Further, detection unit 23 executes these processes for all possible velocity vectors of a moving object. The detection method performed by detection unit 23 is a known technology, and therefore the detailed description thereof will be omitted. Alternatively, another known method may be applied to the detection of the moving object.

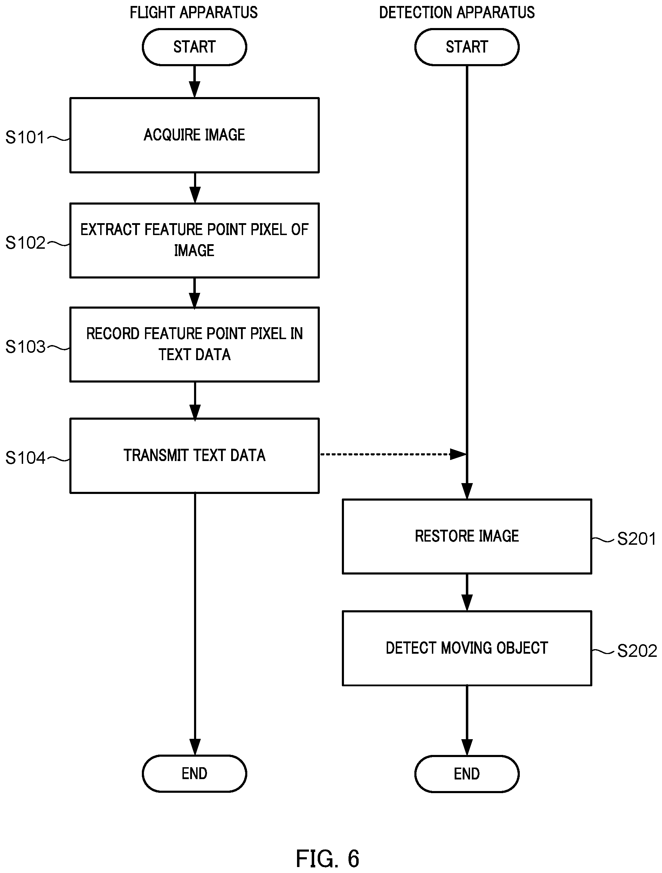

Next, an operation example of detection system 1 will be described. FIG. 6 is a flowchart illustrating an example of a flow of processing executed by each apparatus in the present embodiment. From the left, the flowchart illustrates an example of processing executed by flight apparatus 10 and an example of processing executed by detection apparatus 20.

As illustrated in FIG. 6, flight apparatus 10 acquires an image by imaging unit 11 (step S101). After acquiring the image, flight apparatus 10 extracts a feature point pixel of the image by extraction unit 13 (step S102).

After extracting the feature point pixel, flight apparatus 10 records the feature point pixel in text data by recording unit 14 (step S103). After recording the feature point pixel in the text data, flight apparatus 10 transmits the text data to detection apparatus 20 by transmission unit 12 (step S104).

The processing of steps S101 to S104 is executed by the imaging unit 11 every time an image is acquired. Alternatively, the processing of step S104 may be processing of collectively transmitting, to detection apparatus 20, a plurality of pieces of text data corresponding to a plurality of images observed at different times.

Next, after receiving the text data, detection apparatus 20 restores, by restoration unit 22, the image based on the feature point pixel recorded in the text data (step S201). After restoring the image, detection apparatus 20 detects a moving object from the restored image by detection unit 23 (step S202).

The processing of step S201 may be appropriately executed after receiving a predetermined number of pieces of text data.

After Step S202, the present control ends. The processing of the flowchart illustrated in FIG. 6 may be repeatedly executed after step S202.

According to the present embodiment configured as described above, a feature point pixel is extracted from all the pixels in the image information, and a moving object is detected based on the information in text data in which the data of the feature point pixel is recorded.

Accordingly, a moving object can be detected only by the information in text data in which the data of a feature point pixel is recorded, and therefore the amount of image information to be transmitted can be reduced as compared with a configuration in which data including all the pixels in the image information is transmitted.

In addition, the feature point pixel is a pixel having a brightness value equal to or higher than a predetermined value, and the brightness value is a value brighter than those of a plurality of peripheral pixels located around the pixel. Therefore, even when a moving object appears relatively dark in an image, the moving object can be easily extracted as a feature point pixel in accordance with the setting of the predetermined value.

In conventional art, a moving object needs to clearly appear in an image, but the size of the moving object that can be detected from the image depends on the capability of the imaging unit mounted on a flight apparatus. Therefore, for a moving object that may appear relatively dark in an image, a large optical system or a high-sensitivity sensor is required for the imaging unit, which may increase the cost.

On the other hand, in the present embodiment, a moving object that appear relatively dark in an image can also be easily extracted as a feature point pixel, and therefore it is not necessary to use a large optical system or a high-sensitivity sensor for an imaging unit as in conventional art, which helps keep the cost low.

In addition, the feature point pixel is a pixel whose noise removal parameter calculated based on the pixel and the plurality of peripheral pixels is equal to or higher than a predetermined threshold value.

Therefore, a pixel corresponding to noise can be removed from the feature point pixel candidates, and therefore it is possible to reliably extract a portion that is likely to be a moving object as a feature point pixel.

In addition, the noise removal parameter is a value obtained by dividing the sum of the brightness value of the target pixel and the brightness values of the plurality of peripheral pixels by the brightness value of the target pixel, and therefore it is possible to reliably remove a pixel that is likely to correspond to noise.

In addition, during the extracting of feature point pixels, a feature point pixel is extracted for each of the plurality of images observed at different times, and therefore it is possible to easily specify the feature point pixel corresponding to a moving object.

In addition, the image is restored by setting the brightness value of a pixel corresponding to the feature point pixel to the first brightness value and setting the brightness value of a pixel that is not the feature point pixel to the second brightness value based on the information in text data, and the moving object is detected based on the plurality of restored images. As a result, a restored image in which the portion of a feature point pixel is emphasized more than the other portions is generated, and therefore the restored image in which a moving object clearly appears can be obtained even for an image in which the moving object appears relatively dark.

In addition, the extraction of a feature point pixel is performed in flight apparatus 10, the extraction of a moving object is performed in detection apparatus 20, and text data in which the feature point pixel data is recorded is transmitted from flight apparatus 10 to detection apparatus 20.

For example, there is a solid network on the ground, and therefore it is possible to transmit information on all the pixels in image information to the detection apparatus side without any problem. However, when the data is transmitted from flight apparatus 10 to detection apparatus 20 installed at a location different from that of flight apparatus 10, there is no solid network such as on the ground, and thus there is a certain limit to the amount of data that can be transmitted. Therefore, the impact of a large amount of data (such as data transmission taking too long or data being unable to be transmitted) is more likely to become significant.

On the other hand, in the present embodiment, text data in which the feature point pixel data is recorded is transmitted from flight apparatus 10 to detection apparatus 20, and therefore only the necessary data needs to be transmitted. As a result, the impact of the large amount of data can be reduced, and thus the necessary image information can be smoothly transmitted.

In addition, flight apparatus 10 is an apparatus capable of flying in outer space, and therefore when images captured by flight apparatus 10 in outer space are transmitted to detection apparatus 20, the problem of the impact of the large amount of data described above becomes more pronounced.

However, in the present embodiment, as described above, only necessary data needs to be transmitted, so that the problem that occurs when images captured by flight apparatus 10 in outer space are transmitted to detection apparatus 20 can be effectively solved.

In the above-described embodiment, the noise removal parameter is included in the feature point pixel data, but the present disclosure is not limited to this configuration. The noise removal parameter does not need to be included, or a parameter other than the noise removal parameter may be included. For example, the feature point pixel data may include a bias parameter.

The bias parameter is a parameter indicating a biased direction of the position of an object serving as a candidate for the feature point pixel in an image. The bias parameter is, for example, 1 when the biased direction of the object is an upper left direction, 2 when the biased direction of the object is an upper right direction, 3 when the biased direction of the object is a lower right direction, and 4 when the biased direction of the object is a lower left direction.

The biased direction of an object is a direction with the maximum value among related parameters in the directions calculated based on the target pixel (serving as the candidate for the feature point pixel) and the eight peripheral pixels located around the target pixel.

The related parameter in the upper left direction is the sum of the brightness value of the target pixel and the brightness values of a pixel on the upper side of the target pixel, a pixel on the left side of the target pixel, and a pixel on the upper left side of the target pixel.

The related parameter in the upper right direction is the sum of the brightness value of the target pixel and the brightness values of a pixel on the upper side of the target pixel, a pixel on the right side of the target pixel, and a pixel on the upper right side of the target pixel.

The related parameter in the lower right direction is the sum of the brightness value of the target pixel and the brightness values of a pixel on the right side of the target pixel, a pixel on the lower right side of the target pixel, and a pixel on the lower side of the target pixel.

The related parameter in the lower left direction is the sum of the brightness value of the target pixel and the brightness values of a pixel on the lower side of the target pixel, a pixel on a lower left side of the target pixel, and a pixel on the left side of the target pixel.

The biased direction of an object is a value corresponding to a direction with the maximum value among related parameters in the directions.

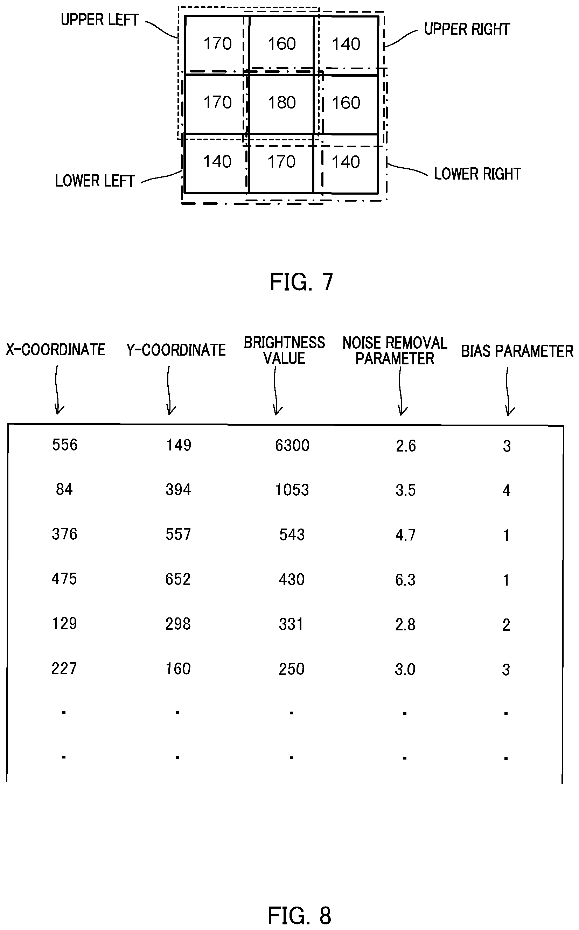

For example, in FIG. 7, the brightness value of the target pixel is 180, and the brightness values of the plurality of peripheral pixels are 170, 160, 140, 170, 160, 140, 170, and 140. In this case, the related parameter in the upper left direction is 680. The related parameter in the upper right direction is 640. The related parameter in the lower right direction is 650. The related parameter in the lower left direction is 660.

In this case, the maximum value of the related parameters in the directions is the related parameter in the upper left direction, and therefore the biased direction of the object is the upper left direction. Therefore, the bias parameter is 1 corresponding to the upper left direction.

In addition, for example, as illustrated in FIG. 8, the text data may record the bias parameter in addition to the x-coordinate of a feature point pixel in an image, the y-coordinate of the feature point pixel, the brightness value of the feature point pixel, and/or the noise removal parameter of the feature point pixel.

By providing the bias parameter in this way, during the binarizing of image data, it is possible to select four pixels that have a higher probability of existence of a moving object, rather than one pixel. The moving object may not move accurately by one pixel unit between images, and therefore, selecting the position of the moving object within four pixels, which has a range wider than one pixel, makes it easier to detect the moving object, thereby improving the detection accuracy of the moving object.

In the above-described embodiment, the brightness value of a feature point pixel, the noise removal parameter of the feature point pixel, the bias parameter of the feature point pixel, and the like are recorded in text data, but the present disclosure is not limited to this configuration. For example, the brightness value of a feature point pixel, the noise removal parameter thereof, and the bias parameter thereof do not need to be recorded as long as the x-coordinate and y-coordinate of the feature point pixel are recorded in the text data.

In the above-described embodiment, the flight apparatus can fly in outer space, but the present disclosure is not limited to this configuration. The flight apparatus does not have to be capable of flying in outer space.

In the above-described embodiment, text data (information on a feature point pixel) is transmitted from a flight apparatus to a detection apparatus, but the present disclosure is not limited to this configuration. For example, a configuration in which the text data is transmitted from a moving apparatus other than the flight apparatus to the detection apparatus may be adopted. In addition, for a configuration in which the detection apparatus includes the imaging unit or the flight apparatus (moving apparatus) includes the detection unit, information on a feature point pixel does not need to be transmitted.

In the above-described embodiment, the information on a feature point pixel is recorded in text data, but the present disclosure is not limited to this configuration. For example, when the detection apparatus includes the imaging unit, the detection apparatus may extract a feature point pixel from the acquired image information to detect a moving object without generating text data. Alternatively, when the flight apparatus includes the detection apparatus, the flight apparatus may detect a moving object without generating text data from the information on a feature point pixel. Furthermore, the flight apparatus may be configured to convert the information on a feature point pixel into data other than the text data and transmit the data to the detection apparatus.

The embodiments above are no more than specific examples in carrying out the present disclosure, and the technical scope of the present disclosure should not be construed in a limitative sense due to the specific examples. In other words, the present disclosure can be carried out in various forms without departing from the gist or main features thereof.

### Industrial Applicability

The detection system of the present disclosure is useful as a detection method and a detection system capable of reducing the amount of image information to be transmitted.

### Reference Signs List

1 Detection system
10 Flight apparatus
11 Imaging unit
12 Transmission unit
13 Extraction unit
14 Recording unit
20 Detection apparatus
21 Communication unit
22 Restoration unit
23 Detection unit

## Claims

1. A detection method for detecting a moving object based on image information, the detection method comprising:
extracting a feature point pixel from all pixels in the image information; and
detecting the moving object based on information on data of the feature point pixel.

2. The detection method according to claim 1, wherein
the feature point pixel is a pixel that satisfies at least a condition such that a brightness value of a target pixel to be extracted is equal to or higher than a predetermined value and the brightness value is a value brighter than brightness values of a plurality of peripheral pixels located around the target pixel.

3. The detection method according to claim 2, wherein
the feature point pixel is a pixel that satisfies a condition such that a noise removal parameter calculated based on the target pixel and the plurality of peripheral pixels is equal to or higher than a predetermined threshold value.

4. The detection method according to claim 3, wherein
the noise removal parameter is a value obtained by dividing a sum of the brightness value of the target pixel and the brightness values of the plurality of peripheral pixels by the brightness value of the target pixel.

5. The detection method according to claim 1, wherein
the image information includes information on a plurality of images observed at different times, and
in the extracting the feature point pixel, the feature point pixel is extracted for each of the plurality of images.

6. The detection method according to claim 5, wherein
the detecting the moving object includes
restoring the image by setting a brightness value of a pixel corresponding to the feature point pixel as a first brightness value and setting a brightness value of a pixel that is not the feature point pixel as a second brightness value different from the first brightness value, and
detecting the moving object based on a plurality of restored images respectively corresponding to the plurality of images.

7. The detection method according to claim 1, wherein
the extracting the feature point pixel is performed in a flight apparatus that includes an imaging unit capable of capturing an image;
the detecting the moving object is performed in a detection apparatus installed at a location different from that of the flight apparatus; and
the detection method further comprises transmitting the information on the data of the feature point pixel from the flight apparatus to the detection apparatus.

8. The detection method according to claim 7, wherein
the flight apparatus is capable of flying in outer space.

9. The detection method according to claim 1, further comprising:
recording, in text data, the information on the data of the feature point pixel, wherein
in the detecting the moving object, the moving object is detected based on the text data.

10. A detection system that detects a moving object based on image information, the detection system comprising:
an extraction unit that extracts a feature point pixel from all pixels in the image information; and
a detection unit that detects the moving object based on information on data of the feature point pixel.
